# EUROPÄISCHE PATENTSCHRIFT

(11) **EP 2 004 384 B1**
(45) Veröffentlichungstag und Bekanntmachung des Hinweises auf die Patenterteilung: **22.06.2011**
(21) Anmeldenummer: 07727172.4
(22) Anmeldetag: 21.03.2007
(51) Int. Cl.: B29C 45/83, F16N 15/00

(54) **SCHLIESSEINHEIT FÜR EINE SPRITZGIESSMASCHINE**
CLAMPING UNIT FOR AN INJECTION-MOULDING MACHINE
UNITE DE FERMETURE POUR PRESSE A INJECTION

(30) Priorität: 12.04.2006 DE 102006017669
(43) Veröffentlichungstag der Anmeldung: 24.12.2008
(73) Patentinhaber: Sumitomo (SHI) Demag Plastics Machinery GmbH, 90571 Schwaig (DE)
(72) Erfinder: GRUNITZ, Otto, 90451 Nürnberg (DE)
(74) Vertreter: Hübner, Gerd
(86) Internationale Anmeldenummer: PCT/EP2007/052696
(87) Internationale Veröffentlichungsnummer: WO 2007/118754

(56) Entgegenhaltungen:
- DE-A1- 2 260 080
- DE-A1- 3 528 121
- JP-A- 2000 141 436

## Beschreibung

Die vorliegende Erfindung betrifft eine Schließeinheit für eine Spritzgießmaschine, die Drehgelenke und insbesondere Kniehebelgelenke mit relativ zueinander bewegten Gelenkflächen aufweist.

Schließeinheiten für Spritzgießmaschinen mit Drehgelenken und insbesondere Kniehebelgelenken sind zum Beispiel aus der JP 2000 141 436 A bekannt. Solche Gelenke müssen ausreichend geschmiert werden, um einen problemlosen Dauerbetrieb zu ermöglichen. Normalerweise werden für die Drehgelenke sogenannte Gleitlagertechnologien eingesetzt. Hierbei wird beispielsweise in einem Pleuelauge eine Lagerbuchse aus Bronze eingesetzt, die fest mit dem Pleuelauge verbunden ist, und auf ihrer Innenfläche glatt oder mit sogenannten Dimpeln, kleinen Vertiefungen, in denen ggf. Graphit oder ähnliche Partikelschmierstoffe aufgenommen sein können, ausgebildet. Diese Gelenkfläche der Bronzebuchse wirkt mit der Außenfläche eines Bolzens, der gewöhnlicherweise aus Stahl besteht, zusammen. Die Oberflächen können hier gehärtet, verchromt oder auch unverchromt sein. Um die Gleit- und Haftreibung bei einer Relativbewegung zwischen Buchse und Stahlbolzen zu reduzieren, kommen als Schmiermittel Fette oder Öle zur Anwendung.

Nachteilig hieran ist einerseits, dass das Schmiermittel zumindest zyklisch erneuert werden muss. Bei einer Fettschmierung tritt einerseits Fett aus dem zwischen den Gelenkflächen gebildeten Schmierspalt aufgrund der Druckbelastung des Gelenks aus, zudem wird das Fett über die Betriebsdauer mit Abriebpartikeln der Gelenkflächen verunreinigt. Bei einer Schmierung mit flüssigem Schmiermittel wie Öl wird meist ein Schmierkreislauf vorgesehen, mittels dessen flüssiges Schmiermittel zyklisch oder kontinuierlich nachgeliefert werden kann, während verbrauchtes flüssiges Schmiermittel, das insbesondere aus dem zwischen den Gelenkflächen gebildeten Schmierspalt austritt, wieder aufgefangen werden muss, was meist im Bereich des Maschinenbetts erfolgt. Da bei diesen Schmiertechniken durchgängig Schmiermittel austritt, können mit einer Schließeinheit dieser Bauart keine Reinraumbedingungen, die sich durch minimale Verunreinigungsabgabe an die Umgebung auszeichnen, realisiert werden.

Eine Abdichtung der Gelenke einer Schließeinheit ist wegen der hohen mechanischen Beanspruchung insbesondere im Fall von Kniehebelgelenken nur schwierig zuverlässig durchzuführen, insbesondere ist eine dauerhafte. Dichtwirkung nur sehr schwer zu gewährleisten.

Aufgabe der vorliegenden Erfindung ist es deshalb, eine Schließeinheit für eine Spritzgießmaschine vorzustellen, die eine einfache, kostengünstige und zuverlässige Schmierung bereitstellt und ein gutes Abdichten der Gelenke erlaubt.

Diese Aufgabe wird erfindungsgemäß durch eine Schließeinheit für eine Spritzgießmaschine gelöst, die Drehgelenke und insbesondere Kniehebelgelenke mit relativ zueinander bewegten Gelenkflächen aufweist, und bei der eine zum Halten eines Magnetofluids ausgebildete Magneteinrichtung und mindestens eine Ausnehmung die mit der Magneteinrichtung zum Festlegen derselben zusammenwirkt, im Bereich der Gelenkflächen von mindestens einem der Gelenke vorgesehen sind. Unter Gelenkflächen werden einander korrespondierende Flächen des Gelenks verstanden, hierunter können beispielsweise eine Innenfläche eines Gelenkauges bzw. einer Lagerbuchse sowie eine Außenfläche eines in diesem bzw. in dieser gelagerten Bolzens fallen. Die Gelenkflächen können gegeneinander eine gleitende Bewegung ausführen, zwischen ihnen können sowohl Haft- als auch Gleitreibungsbedingungen herrschen. Zwischen diesen Gelenkflächen wird ein sogenannter Schmierspalt ausgebildet, in den geeignetes Schmiermittel einbringbar ist, um die Haft- bzw. Gleitreibung zwischen den korrespondierenden Gelenkflächen möglichst zu reduzieren und dadurch Verschleiß und Reaktionsträgheit des Gelenks zu minimieren.

Im Bereich dieser Gelenkflächen ist nun erfindungsgemäß eine Magneteinrichtung ausgebildet. Eine solche Magneteinrichtung, die grundsätzlich aus der DE 22 60 080 A1 bekannt ist, ermöglicht die Ausbildung eines magnetischen Felds im Bereich der Gelenkflächen und insbesondere in dem zwischen den Gelenkflächen ausgebildeten Schmierspalt zumindest beim Betrieb der erfindungsgemäßen Schließeinheit. Durch das solchermaßen erzeugte Magnetfeld kann eine magnetische Flüssigkeit, ein sogenanntes Magnetofluid, die in den Bereich der Gelenkflächen und insbesondere zwischen die Gelenkflächen des mindestens einen Gelenks eingebracht werden kann, dort im wesentlichen gehalten werden.

Als Magnetofluide werden Suspensionen von Teilchen aus magnetischen, insbesondere ferromagnetischen Substanzen bezeichnet. Magnetofluide vereinen normale rheologische Eigenschaften mit starken magnetischen Kraftwirkungen, die sich bereits in einem schwachen Magnetfeld bemerkbar machen. Die Durchmesser der magnetischen Teilchen können beispielsweise im Bereich von 10 nm liegen, sie sind meist mit einer entsprechenden Beschichtung aus langkettigen Molekülen versehen, so dass die Suspension stabil gegenüber einer Sedimentation der Teilchen im Schwerefeld wie auch gegenüber einer Entmischung in starken magnetischen Feldgradienten ist. Auch eine Verklumpung der Teilchen kann so wirksam vermieden werden. Als Trägerflüssigkeiten können unterschiedliche Fluide wie beispielsweise Öl zum Einsatz kommen. Insbesondere bei der Verwendung von Öl als Trägerflüssigkeit, dem entsprechend auch noch weitere vorteilhafte Additive, beispielsweise zur Verbesserung der Gleitfähigkeit oder ähnlichem zugesetzt werden können, kann die Schmierwirkung des Magnetofluids vorteilhaft ausgenutzt werden. Das Vorhandensein der kleinformatigen magnetischen Teilchen, der sogenannten Nanopartikel, kann weiter vorteilhaft zur Schmierwirkung beitragen, da diese die Oberflächenrauigkeit der Gelenkflächen reduzieren und so eine geringere Gleitreibung und eine kleinere Hysterese zwischen Haft- und Gleitreibung sichergestellt werden. Aufgrund der so verringerten Reibung kann bei geringerer Antriebsleistung gleichzeitig eine bessere Positionierung auch bei kleinen Geschwindigkeiten erfolgen.

Die Magneteinrichtung, die erfindungsgemäß im Bereich der Gelenkflächen mindestens eines der Drehgelenke der Schließeinheit vorgesehen ist, ermöglicht es nun, ein Magnetofluid, das gleichzeitig Schmierwirkung hat, im wesentlichen im Bereich der Gelenkflächen zu halten. Hierfür ist die Magneteinrichtung bevorzugt derart ausgebildet, dass sich über den gesamten Bereich der zueinander bewegten Gelenkflächen bzw. zumindest in einem Seitenbereich oder einer Randzone derselben über den Umfang ein im wesentlichen ausreichend starkes magnetisches Feld bildet, das ein Halten des Magnetofluids insbesondere im Bereich des Schmierspaltes ermöglicht. Gegebenenfalls könnte im Betrieb auch nur im Bereich von Randzonen der zueinander bewegten Gelenkflächen ein Magnetofluid gehalten werden, während in einem zentralen Bereich, der durch die Randzonen von der Umgebung abgegrenzt ist, ein herkömmliches Schmiermittel zum Einsatz kommen kann.

Die Magneteinrichtung kann beispielsweise einen oder mehrere Magnete in unterschiedlichen räumlichen Ausgestaltungen umfassen, die in entsprechend geformten oder formbaren Elementen mit geeigneten Materialeigenschaften, beispielsweise paramagnetischem Verhalten, eingebettet sein können. So kann das Feld des bzw. der Magnete gewünscht modifiziert und an die vorliegenden Bedürfnisse angepasst werden. Als Magnete können sowohl Permanent- als auch elektrisch anregbare Magnete zum Einsatz kommen. Besonders bevorzugt werden aufgrund der dauerhaften Wirkung Permanentmagnete eingesetzt, die ein Halten des Magnetofluids auch beim vollen ständigen Stillstand einer Schließeinheit im stromlosen Zustand ermöglichen. Die Magneteinrichtung kann vorteilhafterweise nur im Bereich einer Buchse bzw. eines Pleuelauges, nur im Bereich des Bolzens, oder aber sowohl im Bolzen als auch in der Buchse ausgebildet sein.

Durch das Vorsehen einer Magneteinrichtung im Bereich der Gelenkflächen von mindestens einem der Gelenke kann erfindungsgemäß eine vorteilhafte räumliche Begrenzung des Magnetofluids und damit des Schmiermittels auf diesen Bereich und insbesondere den Schmierspalt erfolgen und insbesondere ein Herauslaufen des Magnetofluids aus dem Gelenk zumindest im Betrieb im wesentlichen vermieden werden. Somit kann auf weitere Dichtmaßnahmen, die ein Austreten von Schmiermittel aus dem Gelenk verhindern sollen, im wesentlichen verzichtet werden.

Durch die Anziehungskraft der Magneteinrichtung wird ein kleiner Druck in dem Magnetofluid in Richtung der Magneteinrichtung erzeugt. Dieser Druck wird bevorzugt nicht so groß gewählt, dass eine hydrostatische Lagerung realisierbar wäre, ist aber in der Lage, das Magnetofluid immer wieder um die Magneteinrichtung zu konzentrieren. So kann ein Auslaufen des Schmiermittels aus dem Lager im wesentlichen auch während Belastung effektiv vermieden werden.

Vorteilhaft hieran ist insbesondere, dass die durch das räumliche Eingrenzen der Aufenthaltswahrscheinlichkeit des Magnetofluids erzielbare Dichtwirkung unabhängig von sich ändernden Toleranzen ist, wie beispielsweise einem sich über die Betriebszeit vergrößernden Schmierspalt. Dieser liegt für ein Kniehebelgelenk einer neuen Maschine beispielsweise im Bereich von 50 Mikrometern, während er sich mit zunehmender Betriebsdauer bis auf 0,2 mm vergrößern kann. Gerade aus diesem Grund sind ausreichend effektive Standarddichtungen nur schwierig vorzusehen, denn sie müssten der sich über die Betriebsdauer ändernden Spaltweite Rechnung tragen können.

Somit kann durch die Verwendung eines Magnetofluids im Bereich relativ zueinander bewegter Gelenkflächen einer Schließeinheit eine dauerhafte Dichtwirkung und somit auch eine Eignung einer entsprechend ausgerüsteten Schließeinheit für die Verwendung unter Reinraumbedingungen bei gleichzeitig sehr guten Schmiereigenschaften gewährleistet werden. Besonders bevorzugt können insbesondere bei einer Kniehebelschließeinheit alle Kniehebelgelenke mit Magneteinrichtungen zum Halten eines Magnetofluids im Bereich der Gelenkflächen ausgestattet sein, denn so kann effektiv eine möglichst geringe Verschmutzungsabgabe, insbesondere in Form von Schmieröl oder Partikelstaub, aus dem Bereich der Gelenkflächen sichergestellt werden.

Des weiteren handelt es sich bei einer solchen Schmierung im wesentlichen um eine Lebensdauerschmierung, da sie aufgrund der die Oberflächenrauhigkeit reduzierenden Nanopartikel auch selbstreparierende Eigenschaften aufweist, die insbesondere im Fall von Abrieb aufgrund Benutzung vorteilhaft sind.

Bei der erfindungsgemäßen Schließeinheit ist im Bereich der Gelenkflächen mindestens eine Ausnehmung vorgesehen, die mit der Magneteinrichtung zum Festlegen derselben zusammenwirkt. Vorteilhaft hieran ist, dass durch das Vorsehen einer Ausnehmung eine räumlich bestimmte Anordnung der Magneteinrichtung einfach sicherzustellen ist. Die Montage der Magneteinrichtung im Bereich der Gelenkflächen wird dadurch zudem vereinfacht.

Besonders vorteilhafterweise kann die erfindungsgemäße Schließeinheit mehrere regelmäßig über den Umfang der Buchse verteilte Ausnehmungen aufweisen, die mit der Magneteinrichtung zum Festlegen derselben zusammenwirken. Durch die Verteilung der Ausnehmungen über den Umfang der Gelenkflächen kann eine möglichst gleichmäßige Ausbildung des magnetischen Feldes im Bereich zwischen den Gelenkflächen, also insbesondere im Schmierspalt sichergestellt werden, so dass das Magnetofluid besonders effektiv und gleichmäßig über den gesamten Umfang der Gelenkflächen gehalten werden kann. Die Magneteinrichtung kann nun beispielsweise in die Ausnehmungen eingesteckt, in diese eingeschoben, zwischen mehreren Ausnehmungen gehaltert oder in ähnlicher Weise durch diese festgelegt werden.

Bei den Ausnehmungen kann es sich beispielsweise um Stichbohrungen in radialer Richtung im Bereich eines einen Bolzen umfassenden Gelenkauges handeln, oder um ebensolche in dem Bolzen. Die regelmäßige Verteilung über den Umfang kann nur in einem Bereich der Gelenkflächen, also beispielsweise nur entlang einer Mittellinie erfolgen, oder aber auch flächig über die gesamten Gelenkflächen verteilt sein. Ebenso können die Ausnehmungen nur im Seitenbereich bzw. in Randzonen der relativ zueinander bewegten Gelenkflächen vorgesehen sein. Die Ausnehmungen können beispielsweise auch als parallel zur Drehachse des Gelenks liegende durchgehende Bohrungen oder Stichbohrungen ausgeführt sein, die noch in einem Bereich der Gelenkflächen liegen und insbesondere zwischen diesen die Ausbildung eines Magnetfelds aufgrund der in die Bohrungen einzubringende Magneteinrichtung ermöglichen.

Gemäß einer vorteilhaften Weiterbildung der vorliegenden Erfindung kann mindestens eine Ausnehmung die Form einer umlaufenden Ringnut oder einer umlaufenden Abstufung aufweisen. Dies hat den Vorteil, dass mit einer umlaufenden Ringnut oder Abstufung eine Magneteinrichtung derart zusammenwirken kann, dass ein möglichst gleichmäßiges Magnetfeld über den gesamten Umfang der Gelenkflächen bereitstellbar ist. Unter Abstufung wird hier eine Ausnehmung verstanden, die eine Gelenkfläche zu einer Randzone hin abstuft, also den Ringspalt hier vergrößert. Insbesondere kann eine Ringnut in einem zentralen Bereich der Gelenkfläche vorgesehen sein, oder aber in einem Außenbereich derselben. Es ist auch möglich, dass beispielsweise zwei solche umlaufenden Ringnuten jeweils in entgegengesetzten Seitenbereichen der Gelenkflächen vorgesehen sind. Alternativ oder zusätzlich kann eine oder zwei umlaufende Abstufungen in entgegengesetzten Seitenbereichen vorgesehen sein. Hierbei können die Ringnuten oder Abstufungen beispielsweise im Bolzen vorgesehen sein, oder aber im Bereich des Gelenkauges, oder aber auch sowohl im Bolzen als auch im Bereich des Gelenkauges. Solche Ringnuten bzw. Abstufungen sind zudem besonders einfach exakt herstellbar.

Gemäß einer weiteren vorteilhaften Ausgestaltung der erfindungsgemäßen Schließeinheit kann das Gelenk eine Buchse aufweisen, in der der Bolzen aufgenommen ist. Diese Buchse ist bevorzugt fest mit dem Gelenkauge verbindbar. Eine oder mehrere Ausnehmungen können auf der Innenseite der Buchse und/oder der Außenseite eines Bolzens des Gelenks ausgebildet sein. Vorteilhaft hieran ist, dass die mechanische Anbringung der Ausnehmungen in einer separaten Buchse oder einem Bolzen einfacher durchführbar ist als in einem Gelenkauge, das im Fall von Kniehebelgelenken fest mit einem Pleuel verbundenen ist. Eine Buchse beispielsweise kann hingegen sehr einfach mit Sackbohrungen, Abstufungen oder mit Ringnuten versehen werden. Diese Ausnehmungen weisen bevorzugt in Richtung des zwischen Buchse und Bolzen gebildeten Schmierspalts, sie können aber ggf. auch, insbesondere bei entsprechender Wahl des Materials der Buchse in die Gegenrichtung orientiert sein. In diesem Fall sollte das Buchsenmaterial das durch die Magneteinrichtung erzeugte Feld verstärken und insbesondere paramagnetisch ausgebildet sein. Ebenso wie es möglich ist, die Ausnehmungen als Sackbohrungen auszugestalten, ist es auch möglich, dieselben als durchgehende Bohrungen in der Buchsenwand vorzusehen.

Die Buchse kann beispielsweise als Dimpelbuchse ausgebildet sein, die auf der Seite der Schmierfläche geringfügige Vertiefungen aufweist, in die Schmiermittel in Partikelform einbringbar ist, wodurch es möglich ist, eine bessere Schmierung auch beim Übergang von Haft- zu Gleitreibung zu realisieren, wie dieser beispielsweise beim Abbau der Schließkraft im Falle von Kniehebelgelenken erfolgt.

Besonders vorteilhaft kann die Buchse auch als Bronzebuchse ausgebildet sein. In Abhängigkeit von der verwendeten Magneteinrichtung kann die Buchse aus para- oder aus diamagnetischem Material gefertigt sein.

Gemäß einer besonders bevorzugten Ausgestaltung der vorliegenden Erfindung ist die Magneteinrichtung in der mindestens einen Ausnehmung aufgenommen. Hierbei kann die Magneteinrichtung beispielsweise eine Vielzahl von Einzelmagneten umfassen, die in verschiedene Ausnehmungen derart einbringbar sind, dass ein zum Halten des Magnetofluids geeignetes Magnetfeld im Bereich des Schmierspaltes erzeugbar ist. Hierbei muss beim Einbringen insbesondere auf eine ausreichende Stärke der Einzelmagnete geachtet werden, wie auch auf eine korrekte relative Anordnung derselben in den Ausnehmungen. Die Magneteinrichtung kann auch die Form eines stromdurchflossenen Drahtes haben, der beispielsweise in einer Nut aufgenommen ist. Hierbei wäre allerdings von Vorteil, wenn ein gewisser Stromfluss durch den Draht auch bei Stillstand der Maschine sichergestellt ist, so dass das Magnetofluid im Bereich der Gelenkflächen gehalten werden kann.

Besonders vorteilhafterweise ist die Ausdehnung der Magneteinrichtung in radialer Richtung geringer als die Ausdehnung der Ausnehmung in dieser Richtung. Dies bewirkt im Fall von Ausnehmungen, die in Richtung des zwischen Buchse und Bolzen gebildeten Schmierspalts weisen, dass im Bereich der Ausnehmungen ein Extravolumen zwischen den relativ zueinander bewegten Gelenkflächen, und insbesondere lokal eine geringfügige Vergrößerung des Schmierspaltes bereitgestellt wird. Bei kleinflächigen Ausnehmungen kann hierdurch zusätzlich eine Art Dimpelwirkung erzielt werden.

Bei Auftreten einer Relativbewegung der Gelenkelemente bzw. Gelenkflächen senkrecht zur Drehachse, beispielsweise bei Belastung des Gelenks bei Bewegung oder Schließkraftaufbau, kann durch dieses Extravolumen das aufgrund der Bewegung im Schmierspalt verdrängte Magnetofluid in diesen Hohlräumen aufgenommen werden, so dass kein vollständiges Verdrängen der Schmierflüssigkeit aus dem Gelenkbereich erfolgt.

Insbesondere im Fall der Ausbildung der Ausnehmung umlaufende Ausnehmung, insbesondere als Ringnut bzw. Ringnuten, kann durch das umlaufende Extravolumen das zwischen zwei kraftaufnehmenden Flächen vorhandene Magnetofluid über die Ringnut entlang des Gelenkumfangs einfach verdrängt und auf eine nicht belastete Seite des Gelenks umgeleitet werden. Durch die Magneteinrichtung kann sichergestellt werken, dass das Magnetofluid im wesentlichen im Einflussbereich derselben verbleibt. Dies hat gleichzeitig den Vorteil, dass es so zu einer ständigen Umwälzung des Schmiermittels entlang der Ringnut kommt. Somit kann an allen Stellen des Gelenks ständig Schmiermittel gleichbleibender Qualität bereitgestellt werden.

Durch das Vorsehen der Magneteinrichtung wird das Magnetofluid sofort nach Entlastung kraftübertragender Gelenkflächen in den von diesen begrenzten Bereich auch entgegen der Schwerkraft zurückgeführt. Hierdurch kann einerseits eine bessere Schmierwirkung mit schnellerem Übergang von Haft- zu Gleitreibung erzielt werden, was einen reibungsloseren und ruckfreieren Betrieb ermöglicht. Andererseits resultiert dies in einem Dämpfungseffekt, der einen erschütterungsärmeren Betrieb der Schließeinheit ermöglicht, wodurch einerseits die mechanischen Elemente der Schließeinheit sowie die von ihr betätigte Formvorrichtung geschont werden und gleichzeitig eine ruhigere Laufart erzielbar ist.

Besonders vorteilhafterweise kann die Magneteinrichtung ein insbesondere flexibles Magnetband umfassen. Ein solches Magnetband kann insbesondere in umlaufende Ringnuten besonders einfach eingebracht werden, kann aber auch im Fall von einzelnen, kleinflächigen Ausnehmungen in dieselben leicht stückweise eingebracht werden. Als solches Magnetband kann beispielsweise ein kunststoffeingebetteter Magnet zum Einsatz kommen, wie er beispielsweise für das dichte Verschließen von Kühlschranktüren eingesetzt wird. Ein solches Magnetband kann aufgrund seiner Flexibilität und beliebigen Zuschneidbarkeit leicht an die Form der Ausnehmung angepasst werden. Solche kunststoffeingebetteten Magnetbänder sind besonders leicht zu bearbeiten und günstig als Meterware erhältlich.

Gemäß einer vorteilhaften Weiterbildung der Erfindung kann die Magneteinrichtung ein Rückschlusselement umfassen, welches bevorzugterweise aus einem ferromagnetischen Material und insbesondere aus Eisen ausgebildet sein kann. Dieses hat die Wirkung, das Magnetfeld weiter zu verstärken. Es kann sich im wesentlichen zwischen den beiden Polen eines eingesetzten Magneten erstrecken und dieser in ihm gegebenenfalls auch eingebettet oder gelagert sein. Im Fall der Verwendung eines Magnetbandes kann dieses beispielsweise durch das Rückschlusselement verstärkt werden und eine einem Hufeisenmagneten ähnliche Magnetfeldkonstellation erreicht werden.

Erfindungsgemäß können im Bereich der Gelenkflächen des Drehgelenks über den Umfang umlaufend zumindest eine, insbesondere aber zwei oder mehrere Druckentlastungsnuten vorgesehen sein. Diese wirken ähnlich wie die zuvor beschriebenen, als Ringnut ausgestalteten Ausnehmungen, in denen eine Magneteinrichtung unter Wahrung eines Volumens eingebracht ist. Durch sie ist es möglich, bei Bewegung des Gelenks Magnetofluid aus dem belasteten Bereich des Gelenks über die Druckentlastungsnut in einem augenblicklich nicht belasteten Gelenkbereich umzulagern. Solche Druckentlastungsnuten sind insbesondere beim Vorsehen nur räumlich begrenzter Ausnehmungen zum Festlegen der Magneteinrichtung vorteilhaft. Besonders bevorzugt ist es, zwei solche Druckentlastungsnuten in Randzonen, also in der Nähe von seitlichen Gelenkbegrenzungen der relativ zueinander bewegten Gelenkflächen über den Umfang umlaufend vorzusehen. So kann durch die Bewegung des Gelenks verdrängtes Magnetofluid vor einem Austreten aus dem zwischen den Gelenkflächen gebildeten Schmierspalt durch die Druckentlastungsnuten in den nicht belasteten Gelenkbereich abgeführt werden, wobei die von der Magneteinrichtung ausgeübte Haltekraft zusätzlich ein Austreten aus dem Gelenk verhindert.

Besonders vorteilhafterweise können die Druckentlastungsnut bzw. die Druckentlastungsnuten unter Einbeziehung der Magneteinrichtung ausgebildet sein. Dies ist beispielsweise der Fall bei den umlaufend ausgebildeten Ringnuten, in die die Magneteinrichtung, die eine geringere radiale Ausdehnung als die Nut hat, eingebracht ist. Insbesondere bei einer Ausbildung der Ausnehmung als umlaufende Abstufung hat sich die Einbeziehung der in dieser vorgesehenen Magneteinrichtung zur Ausbildung einer Druckentlastungsnut, die ein Austreten des verdrängten Magnetofluids verhindern hilft, als vorteilhaft erwiesen. Hierfür ist eine Ausdehnung der Magneteinrichtung in radialer Richtung geringer vorzusehen, als die radiale Ausdehnung der dieselbe festlegenden Ausnehmung.

So kann ein Abschlusselement vorgesehen sein, das bevorzugt aus einem nichtmagnetischen Material ist, und derart mit der Magneteinrichtung zusammenwirkt, dass eine im wesentlichen umlaufende Druckentlastungsnut ausbildbar ist. Das Abschlusselement kann dabei beispielsweise ringförmig oder aus Ringsegmenten ausgebildet und fest mit der Magneteinrichtung verbunden sein. Es kann auch eine Profilierung aufweisen, beispielsweise eine in Richtung der Druckentlastungsnut abfallende Flanke, die eine einfache Eingrenzbarkeit des Magnetofluids ermöglicht, insbesondere aufgrund einer Anpassung des freien Volumens an das durch die Magneteinrichtung ausgebildete Feld. Das Abschlusselement kann beispielsweise aus Aluminium, Messing oder Kunststoff ausgebildet sein.

Bei Einbau von Elementen im Bereich der Gelenke, wie beispielsweise bei Aufbringen zusätzlicher Beilagscheiben zwischen zusammenwirkenden Pleuelarmen oder ähnlichem, ist darauf zu achten, dass das durch die Magneteinrichtung erzeugte Feld durch diese zusätzlichen Elemente nicht beeinträchtigt wird und durchgehend eine ausreichend anziehende Wirkung auf das Magnetofluid ausüben kann. Eine Beeinträchtigung könnte beispielsweise aufgrund eines sogenannten Magnetnebenschlusses auftreten. Aus diesem Grund kann eine gewisse Beabstandung der Ausnehmungen zu den seitlichen Gelenkbegrenzungen von Vorteil sein.

Bei einer entsprechenden Auslegung der Magneteinrichtung kann gewährleistet werden, dass das durch die Magneteinrichtung erzeugte magnetische Feld die dominierende Kraft in der Druckentlastungsnut darstellt, die größer als die auf das Magnetofluid wirkende Schwerkraft ist. So ist einfach gewährleistbar, dass ohne herkömmliche Dichtungen eine Schließeinheit sauber und im wesentlichen ohne Emission von Schmutzstoffen betrieben werden kann.

Im Fall des Vorsehens von Ringnuten, in denen Magneteinrichtungen und insbesondere flexible Magnetbänder vorgesehen sind, können bei ausreichendem Volumen in der Ausnehmung selbst als Druckentlastungsnuten dienen. Insofern können auch diese umlaufenden Ringnuten bevorzugt in Nähe von seitlichen Gelenkbegrenzungen vorgesehen sein. Insbesondere können sie im Bereich der Buchse vorgesehen sein und hier nicht zu weit von den Seitenrändern der Buchse entfernt.

Besonders bevorzugterweise kann eine erfindungsgemäße Schließeinheit eine insbesondere über Schweredruck arbeitende Schmiermittelzufuhrvorrichtung aufweisen, die insbesondere zur Zufuhr von Magnetofluid ausgebildet ist. Eine solche Schmiermittelzufuhrvorrichtung erlaubt es, ein oder mehrere Gelenke der Schließeinheit bei der ersten Inbetriebnahme einfach mit Schmiermittel, und hier insbesondere mit Magnetofluid derart zu versorgen, dass eine ausreichende Schmierung der Gelenke gewährleistet ist. Durch das Vorsehen der Magneteinrichtung zum Halten des Magnetofluids im Bereich der Gelenkflächen kann auch ohne zusätzliche Abdichtmaßnahmen eine saubere Schmiermittelzufuhr zu den Gelenken erfolgen, da das Magnetofluid dort gehalten wird und den Schmierspalt aufgrund des Magnetfelds nicht verlässt. Bei entsprechender Anordnung der Zufuhrvorrichtung ist gerade bei mehreren Gelenken mit Magneteinrichtung eine ausreichende Versorgung jedes zu schmierenden und von der Schmiermittelzufuhrvorrichtung angesteuerten Gelenks möglich. Zudem kann so auf eine separat Einbringung von Magnetofluid in jedes zu schmierende Gelenk verzichtet werden, was einen relativ großen Arbeitsaufwand sowie eine Fehlerquelle darstellt.

Vorteilhafterweise kann durch eine solche über Schweredruck arbeitende Schmiermittelzufuhrvorrichtung auch ein geringfügiger Verlust an Magnetofluid über den Betrieb, beispielsweise aufgrund von Verdunstung an Außenbereichen der Gelenke, zuverlässig und zeitnah ausgeglichen werden. Eine solche über Schweredruck arbeitende Schmiermittelzufuhrvorrichtung kann natürlich auch für jedes zu schmierende Gelenk einzeln vorgesehen werden. Durch die Verwendung von Schweredruck für die Zufuhr des Schmiermittels kann zudem eine besonders preisgünstige Schmiermittelzufuhrvorrichtung bereitgestellt werden.

Besonders bevorzugterweise weist die Schmiermittelzufuhrvorrichtung einen zentralen Schmiermittelzufuhrkanal auf, der in einem Bolzen des Gelenks vorgesehen ist und zur Versorgung der entlang des Bolzens vorhandenen Schmierstellen ausgestaltet ist. Hierfür weist die Schmiermittelzufuhrvorrichtung insbesondere von dem Schmiermittelzufuhrkanal zu einer Bolzenoberfläche verlaufende Radialbohrungen auf. Unter gleichzeitiger Einwirkung der Schwerkraft und der Magnetkraft verteilt sich das zugeführte Magnetofluid im wesentlichen über die Bolzenoberfläche im Bereich des Schmierspaltes, sofern ein mit dem Schmiermittelzufuhrkanal in Strömungsverbindung stehendes Schmiermittelreservoir auf einer größeren Höhe gehalten wird. Für jede Schmierstelle kann ggf. jeweils eine der Schmiermittelzufuhr und eine der Schmiermittelabfuhr dienende Radialbohrung vorgesehen sein. Durch die im Bereich der Gelenkflächen vorgesehenen Magneteinrichtungen kann gleichzeitig effektiv verhindert werden, dass das Schmiermittel den Bereich der Gelenkflächen verlässt. Die Zufuhr von Schmiermittel zum zentralen Schmiermittelzufuhrkanal kann beispielsweise über Schmiernippel und entsprechende Leitungen erfolgen, die von einem Schmiermittelreservoir versorgt werden.

Ein solcher zentraler Schmiermittelzufuhrkanal eines Bolzens kann auch verschiedene Schmierstellen entlang des Bolzens über entsprechende Radialbohrungen versorgen. Dies kann beispielsweise der Fall sein, wenn über den Bolzen mehrere relativ zueinander bewegte Pleuel verbunden sind, wobei diese Pleuel im Zusammenspiel mit dem Bolzen jeweils eigene Schmierspalte ausbilden. So kann beispielsweise in jedem Pleuelauge eine Buchse mit in einem Seitenbereich umlaufenden Ringnuten vorgesehen sein, in der jeweils eine Magneteinrichtung aufgenommen ist und eine Zufuhr von Schmiermittel jeweils in Bereichen zwischen den beiden Ringnuten erfolgen.

Gemäß einer besonders bevorzugten Weiterbildung können die Schmiermittelzufuhrkanäle mehrerer Bolzen miteinander insbesondere über Schläuche in Strömungsverbindungen gebracht werden. Auf diese Weise können mehrere zwischen Gelenkflächen gebildete Schmierstellen an verschiedenen Bolzen gleichzeitig geschmiert werden. Im Falle einer aufgrund von Schweredruck arbeitenden Schmiermittelzufuhrvorrichtung wird bevorzugt von einem Schmiermittelreservoir, das höher als die oberste Schmierstelle gelagert ist, deren Schmiermittelzufuhrkanal über einen Schmiermittelzufuhrschlauch oder ähnliches kontaktiert, und beispielsweise auf der Gegenseite der Schmiermittelzufuhrkanal über einen weiteren Schlauch oder ein ähnliches Verbindungselement mit dem Schmiermittelzufuhrkanal des nächst tiefer gelegenen Gelenks verbunden. So können in absteigender Höhe alle Gelenke einer erfindungsgemäßen Schließeinheit mit Schmiermittel versorgt werden. Vorteilhafterweise kann auch während dem Betrieb eine solche Verbindung aufrecht erhalten bleiben, um eventuelle geringfügige Verluste an Schmiermittel auszugleichen. Des weiteren kann auch unterhalb des untersten Gelenks ein Auffangbehälter vorgesehen werden, um einen geringfügigen Austausch an Schmiermittel während des Betriebs zu ermöglichen.

Die erfindungsgemäße Schließeinheit eignet sich, gerade bei Vorsehen einer entsprechenden Magneteinrichtung im Bereich aller Drehgelenke insbesondere für Reinraumanwendungen, da sie besonders verunreinigungsarm betrieben werden kann. Durch Einsatz eines Magnetofluids im Betrieb kann eine besonders gute Schmierung bei gleichzeitiger Dämpfung gewährleistet werden, ohne dass herkömmliche Dichteinrichtungen im Bereich der Gelenke vorzusehen wären. So kann eine zuverlässig, sauber und leise arbeitende Schließeinheit bereitgestellt werden, die zudem noch besonders kostengünstig im Aufbau und im Betrieb ist, da eine regelmäßige Schmierung nicht erforderlich ist. Somit kann auch auf entsprechende teure Schmiermittelzufuhreinrichtungen verzichtet werden, die eine punktgenaue zyklische Schmierung der einzelnen Gelenke ermöglichen. Vielmehr kann bei Bedarf eine besonders kostengünstige Schmiermittelzufuhr vorgesehen werden, die insbesondere aufgrund von Schweredruck arbeitet und im wesentlichen zum Erstschmieren sowie zum Ersetzen minimaler Verluste im Betrieb zum Einsatz kommt.

Ausführungsbeispiele der vorliegenden Erfindung soll anhand der folgenden Figuren noch näher erläutert werden. Es zeigen
- Figur 1:: schematisch eine Kniehebelschließeinheit, die erfindungsgemäß ausgestaltet sein kann,
- Figur 2:: einen schematischen Querschnitt durch ein Drehgelenk einer erfindungsgemäßen Schließeinheit,
- Figur 3:: einen schematischen Querschnitt durch eine weitere Ausführungsform eines Drehgelenks einer erfindungsgemäßen Schließeinheit,
- Figur 4:: einen schematischen Querschnitt durch eine weitere Ausführungsform eines Drehgelenks einer erfindungsgemäßen Schließeinheit,
- Figur 5:: einen Teilschnitt durch die Ausführungsform gemäß Figur 4 mit einer schematischen Prinzipskizze,
- Figur 6:: einen schematischen Schnitt durch mehrere Gelenke einer erfindungsgemäßen Schließeinheit, und
- Figur 7:: eine erfindungsgemäße Schließeinheit schematisch in der Draufsicht mit einer Schmiermittelzufuhrvorrichtung.

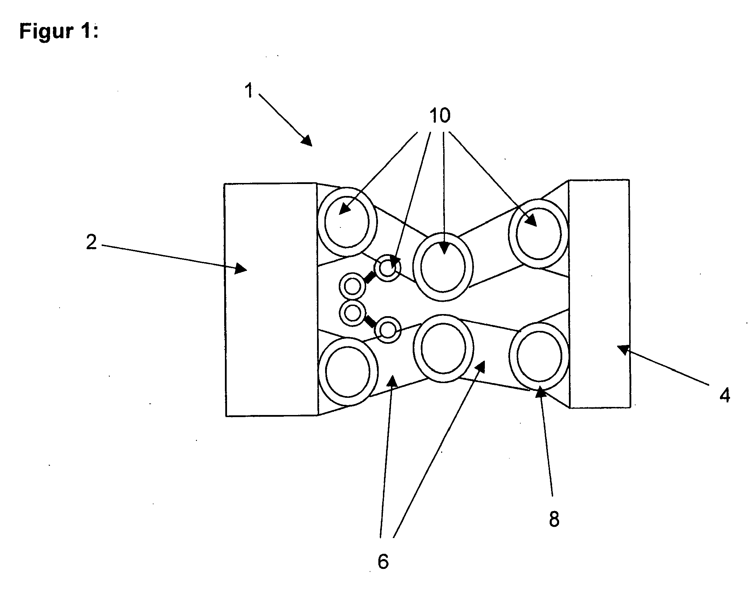

Figur 1 zeigt in der Seitenansicht schematisch eine erfindungsgemäße Schließeinheit 1. Diese weist eine Abstützplatte 2 auf, gegenüber der eine bewegliche Formaufspannplatte 4 verfahrbar angeordnet ist. Diese kann eine Formwerkzeughälfte tragen, die mit einer weiteren Formwerkzeughälfte, die auf einer festen Formaufspannplatte gehaltert ist, zusammenwirkt. Diese sind nicht dargestellt. Die Verfahrbewegung der beweglichen Formaufspannplatte 4 beim Öffnen und Schließen der Form wird über einen Kniehebelmechanismus bewerkstelligt. Dieser weist mehrere Pleuel 6 auf, an deren Enden Pleuelaugen 8 vorgesehen sind, über die diese mit weiteren Pleueln 6 oder Abstützeinrichtungen, die beispielsweise an den Platten vorgesehen sein können, über Bolzen 10 verbunden werden können. Der Kniehebelmechanismus kann beispielsweise über einen nicht dargestellten, gegenüber der Abstützplatte 2 wirkenden Spindeltrieb oder einen Druckkolben betrieben werden. Die Gelenke des Kniehebels sind beim Betrieb der erfindungsgemäßen Schließeinheit drehbewegt und müssen entsprechend geschmiert werden.

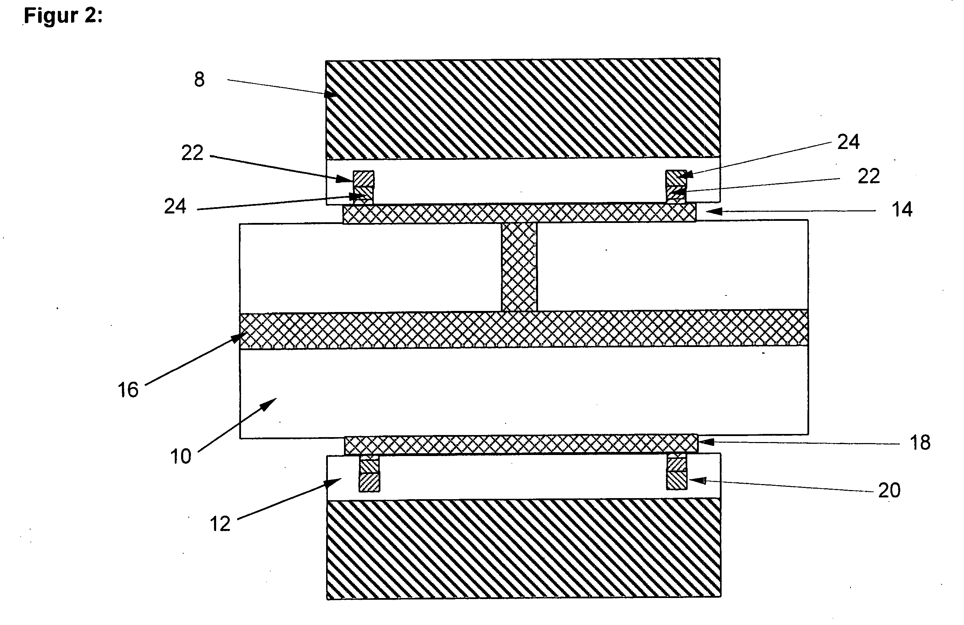

In Figur 2 ist ein Schnitt durch ein solches Drehgelenk schematisch dargestellt. In einem Pleuelauge 8 eines nicht näher dargestellten Pleuels 6 ist eine Lagerbuchse 12 fest aufgenommen. Diese kann beispielsweise aus Bronze gefertigt sein. In der Lagerbuchse 12 ist der Bolzen 10 drehbeweglich aufgenommen, bei Belastung kann er auch senkrecht zur Drehachse relativ zur Buchsenoberfläche verschoben werden. Zwischen den relativ zueinander bewegten Gelenkflächen des Bolzens 10 und der Lagerbuchse 12 ist ein sogenannter Schmierspalt 14 ausgebildet, in dem im Betrieb Magnetofluid 18 als Schmiermittel aufgenommen ist. Dieses kann über einen zentralen Schmiermittelzufuhrkanal 16 und eine von diesem radial abzweigende Zufuhrbohrung in den Bereich des Schmierspalts 14 zugeführt werden.

In der Nähe der seitlichen Begrenzung der Lagerbuchse 12 sind in dieser zwei umlaufende Ringnuten 20 vorgesehen. In diese Ringnuten 20 ist jeweils als Magneteinrichtung ein flexibles Magnetband eingelegt, dessen Nordpol 22 und Südpol 24 schematisch unterschiedlich schraffiert dargestellt sind. Um im Bereich des Schmierspaltes 14 ein zum Halten eines Magnetofluids, das als Schmiermittel dient, geeignetes Magnetfeld zu erzeugen, muss das Magnetband in die beiden Ringnuten gegengleich eingelegt werden, so dass der Südpol des linken Magnetbandes mit dem Nordpol des rechten Magnetes ein entsprechendes Feld aufbauen kann.

Das Magnetband weist in radialer Richtung eine geringere Ausdehnung auf als die Höhenausdehnung der Nut 20. Dadurch wird durch die Nut 20 ein Extravolumen bereitgestellt, in welchem Magnetofluid 18 aufgenommen werden kann. Die Nuten 20 dienen somit neben der Aufnahme der Magneteinrichtung auch als Druckentlastungsnuten. Die Verteilung des Magnetofluids 18 im Bereich der Gelenkflächen ist nur stark schematisch dargestellt. Die genaue Ausdehnung des Magnetofluids über die Ringnuten 20 seitlich hinaus wird durch die Stärke des Magnetfelds, das durch die Magneteinrichtung hervorgerufen wird, bestimmt.

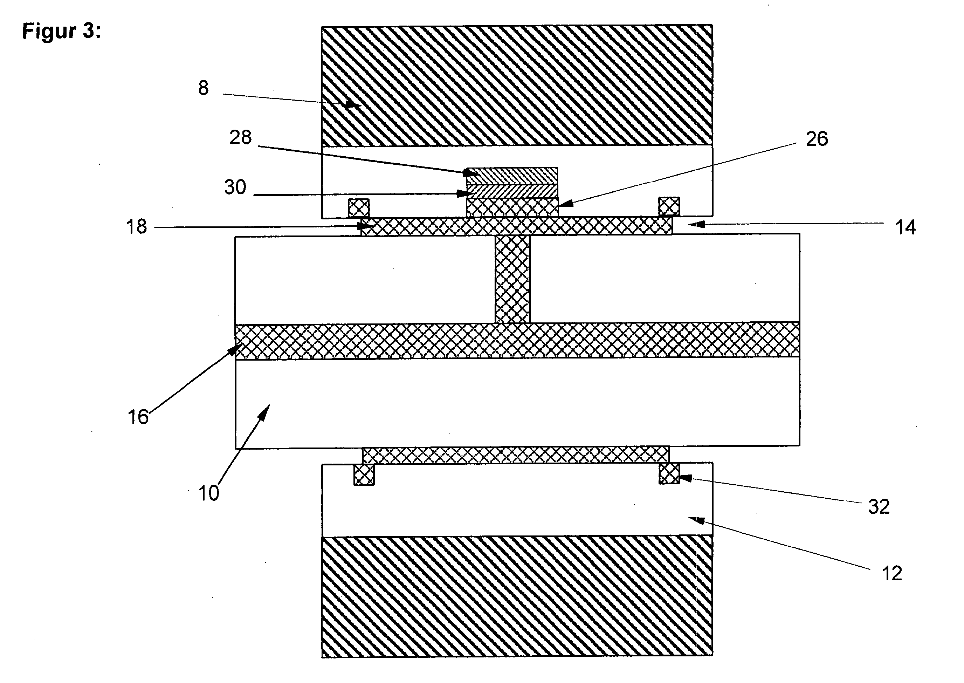

In Figur 3 ist schematisch im Querschnitt eine alternative Ausgestaltung eines Gelenks einer erfindungsgemäßen Schließeinheit 1 dargestellt. Entsprechende Elemente werden mit den gleichen Bezugsziffern wie in Figur 2 bezeichnet. In einem Pleuelauge 8 ist eine Lagerbuchse 12 aufgenommen, in der ein Bolzen 10 beweglich gelagert ist. Zwischen einer Außenfläche des Bolzens 10 und einer Innenfläche der Lagerbuchse 12 ist ein Schmierspalt 14 ausgebildet, in dem als Schmiermittel ein Magnetofluid 18 aufgenommen ist. In der Lagerbuchse sind regelmäßig über ihren Umfang verteilt Ausnehmungen 26 vorgesehen, die die Form einer radialen Sackbohrung haben. Im Schnitt ist nur eine solche Ausnehmung dargestellt. In diesen Ausnehmungen sind jeweils Magnete in entsprechender Polorientierung aufgenommen. Auch hier ist wieder schematisch der Nordpol 28 und der Südpol 30 des Magnets gezeigt. Hierbei kann die seitliche Ausdehnung des Magneten auch kleiner als die der Ausnehmung sein. Oberhalb des Magneten bleibt noch ein Volumen zum Aufnehmen von Magnetofluid 18 in der Ausnehmung 26. Die Ausnehmung wirkt somit auch nach Art eines Dimpels bei einer Lagerbuchse.

In der Buchse sind Umlaufdruckentlastungsnuten 32 vorgesehen, die Magnetofluid 18 aufnehmen können. Durch die in den Ausnehmungen 26 aufgenommenen Magneteinrichtungen 28, 30 wird auf das Magnetofluid 18 eine anziehende Kraft ausgeübt, die im wesentlichen ein Entfernen desselben aus dem Einflussbereich der Magneteinrichtungen verhindert. Die Verteilung des Magnetofluids ist nur grob angegeben, sie könnte sich im unbelasteten Zustand in Abhängigkeit von der Magnetfeldstärke auch auf den Bereich innerhalb der Druckentlastungsnuten 32 beschränken. Die Zufuhr des Magnetofluids 18 erfolgt wieder über einen zentralen Schmiermittelkanal 16 und eine Stichbohrung, die an einer Oberfläche des Bolzens 10 im Bereich des Schmierspalts 14 endet.

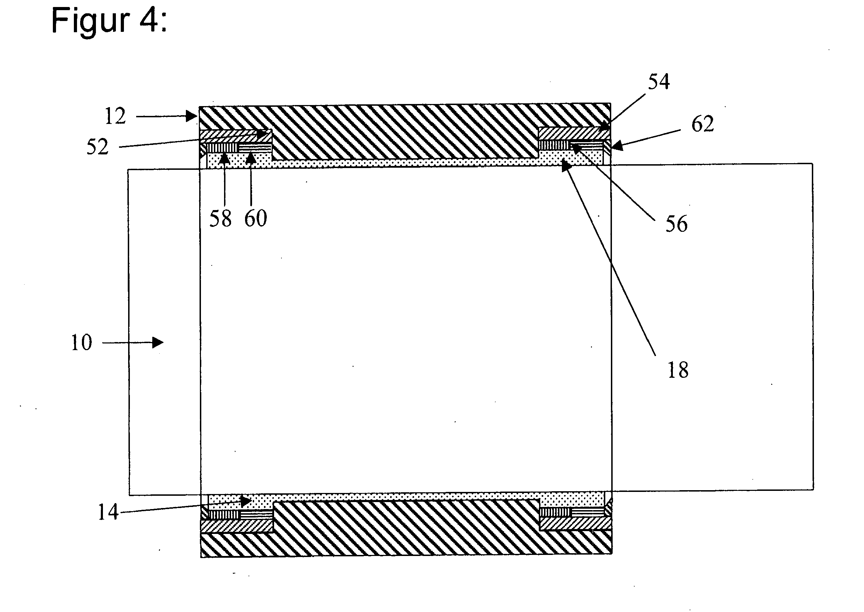

In Figur 4 ist schematisch im Querschnitt eine weitere alternative Ausgestaltung eines Gelenks einer erfindungsgemäßen Schließeinheit 1 dargestellt. Entsprechende Elemente werden mit den gleichen Bezugsziffern wie in Figur 2 und 3 bezeichnet. In einer Lagerbuchse 12 ist ein Bolzen 10 beweglich gelagert. Zwischen einer Außenfläche des Bolzens 10 und einer Innenfläche der Lagerbuchse 12 ist ein Schmierspalt 14 ausgebildet, in dem als Schmiermittel ein Magnetofluid 18 aufgenommen ist. In Seitenbereichen der Lagerbuchse 12 sind über ihren Umfang umlaufende Abstufungen 52 vorgesehen. In diesen Abstufungen 52 sind jeweils Magnetbänder 56 in entsprechender Polorientierung aufgenommen. Auch hier ist wieder schematisch der Nordpol 58 und der Südpol 60 des Magnets gezeigt. Zwischen Lagerbuchse 12 und Magnetband 52 ist ein Rückschlusselement 54 vorgesehen, das die Wirkung des Magnetbandes verstärkt und eine Magnetfeldkonstellation hervorruft, die der eines Hufeisenmagneten vergleichbar ist. Das Rückschlusselement 54 kann als Ring ausgebildet sein, der in die Abstufung 52 eingepresst oder eingeklebt werden kann. Hierbei ist die seitliche Ausdehnung des Rückschlusselements 54 und des Magnetbandes 56 kleiner als die der Abstufung 52. Oberhalb des Magnetbandes 56 bleibt noch ein Volumen zum Aufnehmen von Magnetofluid 18 in der Abstufung 52. Ein nichtmagnetisches Abschlusselement 62, das mit dem Rückschlusselement 54 und/oder dem Magnetband 56 verbunden ist, schließt die Abstufung zur Außenseite des Gelenks ab, so dass eine Druckentlastungsnut ausgebildet wird. Durch diese kann Magnetofluid 18 aufgenommen und abgeleitet werden.

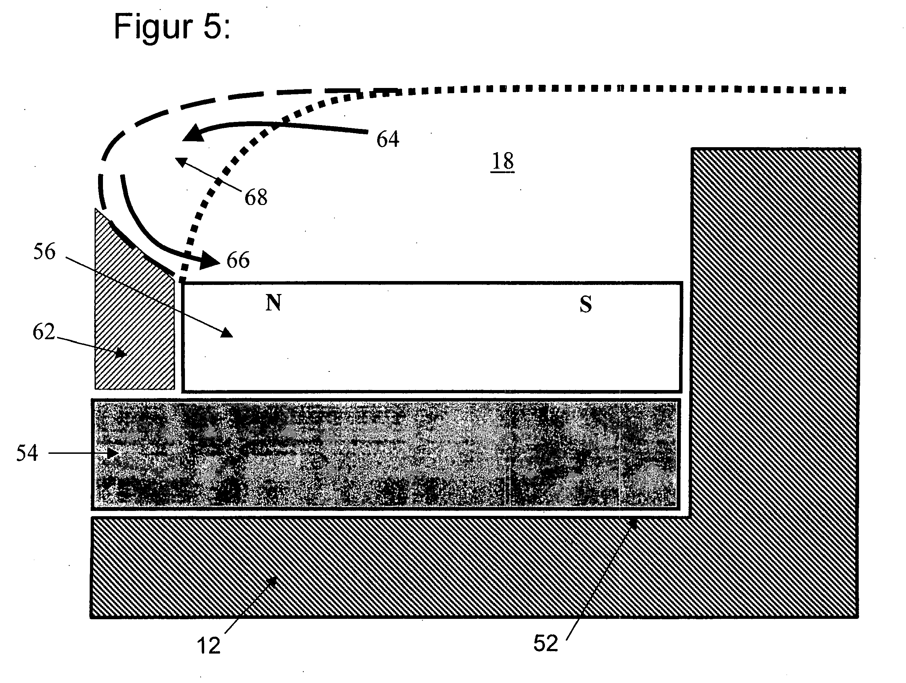

In Figur 5 ist ein Ausschnitt des Gelenks gemäß Figur 4 schematisch nach Art einer Prinzipskizze dargestellt. In der Buchse 12 ist unter Einbeziehung von Rückschlusselement 54 und Magnetband 56 sowie Abschlusselement 62 eine umlaufende Druckentlastungsnut ausgebildet. In dieser ist im unbelasteten Zustand das Magnetofluid 18 aufgenommen, dessen räumliche Begrenzung durch die punktierte Linie schematisch grob dargestellt ist. Bei Belastung des Gelenks wird das Magnetofluid 18 seitlich deformiert sowie entlang der Druckentlastungsnut verdrängt. Die seitliche Deformierung in das Verdrängungsausgleichsvolumen 68 ist schematisch durch die gestrichelte Linie dargestellt, die Verdrängungsbewegung ist durch den Pfeil 64, die Rückflussbewegung durch den Pfeil 66 dargestellt. Das Verdrängungsausgleichsvolumen 68 wird unter Einwirkung des Magnetfeldes festgelegt und auf den Bereich des Schmierspaltes 14 des Gelenks begrenzt. Das Abschlusselement 62 ist derart profiliert, hier abgeschrägt, dass eine vorteilhafte Rückführung entlang der Feldlinien des Magnetfelds ermöglicht ist. Die Zufuhr des Magnetofluids 18 kann auch bei dieser Ausführungsform über einen - nicht dargestellten - zentralen Schmiermittelkanal erfolgen.

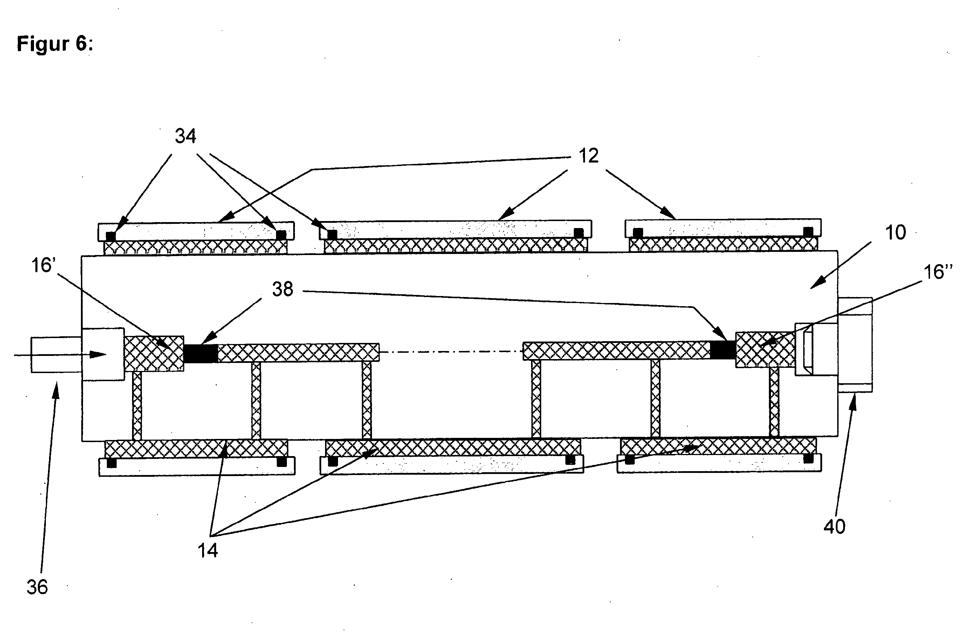

Figur 6 zeigt einen weiteren Bolzen 10, der mit mehreren Lagerbuchsen 12 zusammenwirkt. Diese Lagerbuchsen sind wie in Figur 2 gezeigt ausgebildet, in ihren Seitenbereichen sind in Ringnuten Ringmagnete 34 in entsprechender Polung aufgenommen. Die entsprechenden Ringnuten dienen hier gleichzeitig als Druckentlastungsnuten. Eine Zufuhr des Magnetofluids in die jeweiligen Schmierspalte 14 erfolgt über einen Schmiernippel 36 in einen zentralen Schmiermittelzufuhrkanal 16', von dessen erstem Bereich eine radiale Stichbohrung an der Bolzenoberfläche mündet. Über diese Stichbohrung wird der Ringspalt 14 im Bereich der linken Lagerbuchse 12 versorgt. Der zentrale Schmiermittelzufuhrkanal 16' ist durch eine entsprechend angebrachte Verschlussschraube 38 unterbrochen, über eine weitere radiale Stichbohrung wird eine Verbindung zwischen dem Schmierspalt 14 und dem zweiten Teil des Schmiermittelzufuhrkanals 16' hergestellt. Über eine seitlich versetzte weitere radiale Stichbohrung wird der zwischen der zweiten Lagerbuchse 12 und dem Bolzen 10 gebildete zweite Schmierspalt 14 versorgt, von dem aus über eine seitlich versetzte weitere Stichbohrung ein zweiter zentraler Schmiermittelzufuhrkanal 16" versorgt wird. Von diesem erfolgt ein Versorgen des dritten, in der Figur rechten Schmierspalts 14 über eine weitere axial versetzte Stichbohrung sowie eine Abfuhr in den zweiten Teil des zentralen Schmiermittelzufuhrkanals 16". Seitlich ist dieser zweite zentrale Zufuhrkanal 16" im Betrieb durch ein Verschlusselement 40 versperrt. Beim Befüllen jedoch wird dieses Verschlusselement entfernt, und unter Austritt von Luft kann eine durchgängige Füllung der zentralen Schmiermittelzufuhrkanäle 16' und 16" sowie der entsprechenden Schmierspalte 14 und der diese kontaktierenden Stichbohrungen erfolgen. Alternativ kann auch ein weiterer Schmiernippel anstelle des Verschlusselements 40 vorgesehen sein, der es erlaubt, einen weiteren Schmiermittelzufuhrkanal eines anderen Gelenkes in Strömungsverbindung mit den zentralen Schmiermittelzufuhrkanälen 16' und 16" zu bringen.

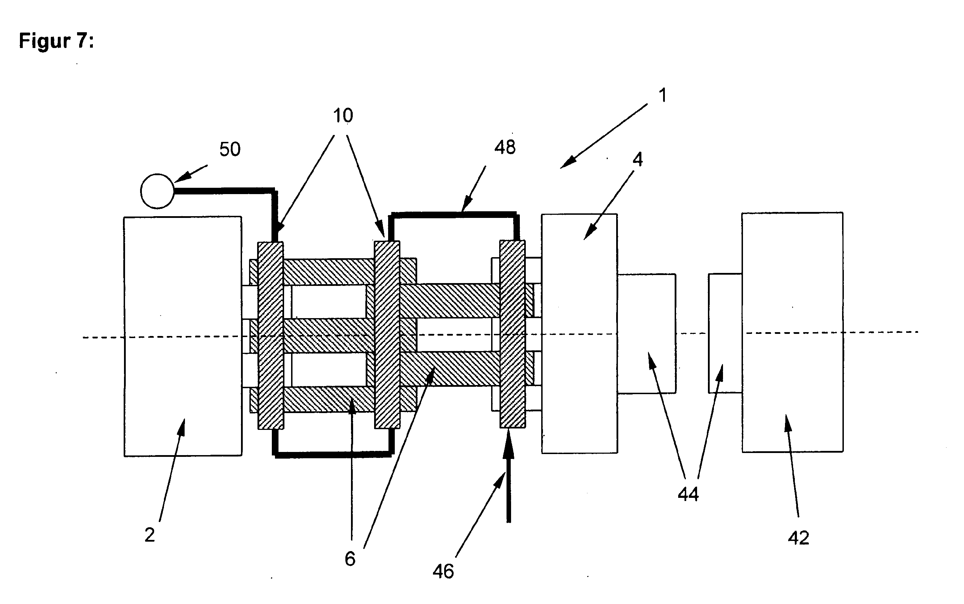

Die Figur 7 zeigt schematisch in der Draufsicht eine erfindungsgemäße Schließeinheit 1 mit einer Abstützplatte 2, einer beweglichen Formaufspannplatte 4, auf der eine Formhälfte 44 gehaltert ist, sowie einer festen Formaufspannplatte 42, auf der eine zweite Formhälfte 44 gehaltert ist. Über Pleuel 6 eines Kniehebelmechanismus ist die bewegliche Formaufspannplatte 4 relativ zur Abstützplatte 2 bewegbar. Die Abstützplatte 2, die Pleuel 6 und die bewegliche Formaufspannplatte 4 sind über Bolzen 10 beweglich verbunden. Für die so geformten Gelenke ist eine Schmierung mittels eines Magnetofluids wie zuvor geschildert vorgesehen. Über einen ersten, vertikal am höchsten gelegenen Anschmierpunkt 46 kann eine Zufuhr von Magnetofluid zu den Schmierspalten 14 der entlang eines ersten Bolzen 10 gebildeten Gelenke erfolgen, wie dies in Figur 4 schematisch gezeigt ist. Von hier kann über eine Schmierverbindung 48, die beispielsweise über einen die jeweiligen Schmiernippel verbindenden Schlauch ausgebildet ist, die Versorgung eines nächsttiefer gelegenen Gelenkes der Schließeinheit 1 erfolgen. Über weitere solche Schmierverbindungen 48 können sämtliche Gelenke der erfindungsgemäßen Schließeinheit 1 so mit Schmiermittel versorgt werden, ohne dass hierfür zusätzliche Fördereinrichtungen vorzusehen wären. Vom tiefstgelegenen Gelenk mündet eine Sammelleitung in einen Sammelbehälter 50.

Nach einem anfänglichen Befüllen aller Schmierspalte 14 über diese Schmiermittelzufuhrvorrichtung kann als Sammelbehälter. 50 ein kleines Gefäß ausreichen, denn im Betrieb findet im wesentlichen kein Verbrauch oder Durchsatz von Schmiermittel statt, da aufgrund der erfindungsgemäß vorgesehenen Magneteinrichtung das magnetofluide Schmiermittel im Bereich der Gelenke gehalten wird. Über den ersten Anschmierpunkt 46 kann jedoch auch während des Betriebs, beispielsweise von einer kleinen Nachfüllflasche auf der Abstützplatte, ein Ausgleich geringfügiger Verluste erfolgen.

Beim Betrieb einer erfindungsgemäßen Schließeinheit mit Gelenken, wie sie schematisch in Figur 2 dargestellt sind, sind die Schmierspalte 14 der Gelenke mit so viel Magnetofluid 18 gefüllt, wie durch die in den Nuten 20 vorgesehenen Magneteinrichtungen 22, 24 gehalten werden kann. Der zentrale Schmiermittelzufuhrkanal 16 kann zu diesem Zeitpunkt entweder an einer Schmiermittelzufuhrvorrichtung wie bereits geschildert hängen, oder aber auch gegen die Umgebung abgedichtet sein. Bei einer Öffnungs- oder Schließbewegung der Schließeinheit 1 erfolgt eine Relativbewegung zwischen der Außenfläche des Bolzens 10 und der Innenfläche der Lagerbuchse 12. Da unter geringer Belastung das magnetofluide Schmiermittel 18 durch die Magneteinrichtungen 22, 24 im wesentlichen gleichmäßig im Ringspalt gehalten wird, kann eine durchgehende und ausreichende Schmierung der relativ zueinander bewegten Gelenkflächen gewährleistet werden. Das von den Magneteinrichtungen 22, 24 erzeugte Magnetfeld ist auch ausreichend, um das Magnetofluid 18 entgegen der Schwerkraft im Schmierspalt 14 gleichmäßig über die Außenfläche des Bolzens 10 verteilt zu halten und ein Entweichen aus dem Schmierspalt 14 zu verhindern.

Beim Aufbau eines Schließdruckes erfolgt ein Übergang von Gleitreibung zwischen den Gelenkflächen des Bolzens 10 und der Lagerbuchse 12 zu Haftreibung, denn der Bolzen 10 wird auf die kraftübertragende Seite der Lagerbuchse 12 angepresst. Hierdurch kommt es zu einer Veränderung der Gestalt des Schmierspaltes 14 und zu einer Verdrängung von Magnetofluid 18 aus dem Bereich zwischen den kraftübertragenden Flächen. Aufgrund des Vorsehens der Magneteinrichtungen 22, 24 und der in den sie aufnehmenden Nuten 20 vorgesehenen zusätzlichen Volumina kann das verdrängte Magnetofluid 18 entlang der Nuten 20 unter Einwirkung der Magneteinrichtung 22, 24 auf eine gegenüberliegende Seite des Gelenks verdrängt werden. Hierbei wird es durch die Magnetkraft im Bereich der Gelenkflächen gehalten und an einem Austreten aus dem Gelenkbereich verhindert. Sobald eine Entlastung des Gelenks bei Abbau des Schließdruckes erfolgt, wird das Magnetofluid 18 aufgrund der Wirkung der Magneteinrichtung 22, 24 wieder gleichmäßig über den Umfang des Bolzens 10 verteilt und somit eine durchgehend gute Schmierung des Gelenks gewährleistet.

Beim Betrieb einer Schließeinheit mit Gelenken gemäß der Figur 3 erfolgt durch die regelmäßig über den Umfang der Lagerbuchse 12 verteilten Magneteinrichtungen 28, 30 eine entsprechende Wirkung. Diese halten das Magnetofluid im wesentlichen in gleichmäßiger Dicke auch entgegen der Schwerkraft über den Schmierspalt 14 verteilt. Erst bei Druckbelastung des Gelenks, wie sie beim Aufbringen des Schließdruckes oder beim Aufbringen der Aufreißkraft erfolgt, wird Magnetofluid 18 aus dem Bereich der druckbelasteten Flächen des Bolzens 10 und der Lagerbuchse 12 verdrängt. Hierbei wirken die regelmäßig über den Umfang der Lagerbuchse 12 verteilten Magneteinrichtungen 28, 30 weiter anziehend auf das Magnetofluid, so dass ein Austreten aus dem Gelenkbereich verhindert wird. Hierfür sind des weiteren Druckentlastungsnuten 32 vorgesehen, in die das Magnetofluid 18 beim Aufbringen einer Kraft auf das Gelenk eintreten und im wesentlichen auf die Gegenseite des Gelenks ausweichen kann. Die anziehende Kraft der Magneteinrichtungen 28, 30 ist hierfür ausreichend ausgelegt, so dass sie ein Entweichen der Flüssigkeit über die Druckentlastungsnuten hinaus im wesentlichen verhindern.

Der Betrieb einer Schließeinheit mit Gelenken gemäß der Figur 4 erfolgt durch die umlaufend in Abstufungen 52 der Lagerbuchse 12 vorgesehenen Magneteinrichtungen 54, 56 und die unter Einbeziehung derselben ausgebildeten Druckentlastungsnuten mit entsprechender Wirkung.

Eine erfindungsgemäße Schließeinheit 1 ist besonders vorteilhaft im Betrieb, da sie sich auch für den Einsatz unter Reinraumbedingungen eignet. Zudem ermöglicht sie eine kostengünstige Schmierung sämtlicher Drehgelenke der Schließeinheit unter gleichzeitiger Sicherstellung einer durchgängig ausreichenden Schmierung. Des weiteren kann bei der Verwendung eines Magnetofluids als Schmiermittel eine Dämpfungswirkung erzielt werden, die insbesondere aufgrund der anziehenden Kraft der Magneteinrichtung und der damit rückstellenden Kraft auf das Schmiermittel eine schnelle und gleichmäßige Benetzung der relativ zueinander bewegten Gelenkflächen bewirkt.

### Bezugszeichenliste

- 1: Schließeinheit
- 2: Abstützplatte
- 4: bewegliche Formaufspannplatte
- 6: Pleuel
- 8: Pleuelauge
- 10: Bolzen
- 12: Lagerbuchse
- 14: Schmierspalt
- 16: zentralen Schmiermittelzufuhrkanal
- 18: Magnetofluid
- 20: Ringnut
- 22: Nordpol
- 24: Südpol
- 26: Ausnehmung
- 28: Nordpol
- 30: Südpol
- 32: Druckentlastungsnut
- 34: Ringmagnet
- 36: Schmiernippel
- 38: Verschlußschraube
- 40: Verschlußelement
- 42: feste Formaufspannplatte
- 44: Formwerkzeughälften
- 46: erster Anschmierpunkt
- 48: Schmierverbindung
- 50: Sammelbehälter
- 52: Abstufung
- 54: Rückschlusselement
- 56: Magnetband
- 58: Nordpol
- 60: Südpol
- 62: Abschlussring
- 64: Verdrängungsbewegung
- 66: Rückflussbewegung
- 68: Verdrängungsausgleichvolumen

## Patentansprüche

1. Schließeinheit für eine Spritzgießmaschine, die Drehgelenke (8, 10) und insbesondere Kniehebelgelenke mit relativ zueinander bewegten Gelenkflächen aufweist,
**dadurch gekennzeichnet, dass**
eine zum Halten eines Magnetofluids (18) ausgebildete Magneteinrichtung im Bereich der Gelenkflächen von mindestens einem der Gelenke vorgesehen ist, wobei im Bereich der Gelenkflächen mindestens eine Ausnehmung (20, 26, 52) vorgesehen ist, die mit der Magneteinrichtung zum Festlegen derselben zusammenwirkt.

2. Schließeinheit nach Anspruch 1,
**dadurch gekennzeichnet, dass**
mehrere regelmäßig über den Umfang der Gelenkflächen verteilte Ausnehmungen (20, 26, 52) vorgesehen sind, die mit der Magneteinrichtung zum Festlegen derselben zusammenwirken.

3. Schließeinheit nach Anspruch 1 oder 2,
**dadurch gekennzeichnet, dass**
mindestens eine Ausnehmung die Form einer umlaufenden Ringnut (20) oder Abstufung (52) aufweist.

4. Schließeinheit nach einem der vorgennanten Anspruche,
**dadurch gekennzeichnet, dass**
die Ausnehmung bzw. die Ausnehmungen (20, 26, 52) auf der Innenseite einer Buchse (12) oder der Außenseite eines Bolzens (10) des Gelenks ausgebildet ist bzw. sind.

5. Schließeinheit nach einem der vorgenannten Ansprüche,
**dadurch gekennzeichnet, dass**
die Magneteinrichtung in der mindestens einen Ausnehmung (20, 26, 52) aufgenommen ist.

6. Schließeinheit nach Anspruch 5,
**dadurch gekennzeichnet, dass**
die Ausdehnung der Magneteinrichtung in radialer Richtung geringer als die der Ausnehmung (20, 26, 52) ist.

7. Schließeinheit nach einem der vorgenannten Ansprüche,
**dadurch gekennzeichnet, dass**
die Magneteinrichtung ein insbesondere flexibles Magnetband (22, 24; 56) umfasst.

8. Schließeinheit nach einem der vorgenannten Ansprüche,
**dadurch gekennzeichnet, dass**
die Magneteinrichtung ein Rückschlusselement (54), insbesondere aus Eisen, umfasst.

9. Schließeinheit nach einem der vorgenannten Ansprüche ,
**dadurch gekennzeichnet, dass**
im Bereich der Gelenkflächen über den Umfang umlaufend zumindest eine, insbesondere aber zwei bevorzugt in Nähe von seitlichen Gelenkbegrenzungen verlaufende Druckentlastungsnuten (32) vorgesehen sind.

10. Schließeinheit nach Anspruch 9,
**dadurch gekennzeichnet, dass**
die Druckentlastungsnut/Druckentlastungsnuten (20) unter Einbeziehung der Magneteinrichtung ausgebildet sind.

11. Schließeinheit nach Anspruch 10,
**dadurch gekennzeichnet, dass**
ein insbesondere nichtmagnetisches Abschlusselement (62) zum Ausbilden einer Druckentlastungsnut vorgesehen ist.

12. Schließeinheit nach einem der vorgenannten Ansprüche,
**dadurch gekennzeichnet, dass**
eine insbesondere über Schweredruck arbeitende Schmiermittelzufuhrvorrichtung insbesondere zur Zufuhr von Magnetofluid (18) vorgesehen ist.

13. Schließeinheit nach Anspruch 12,
**dadurch gekennzeichnet, dass**
die Schmiermittelzufuhrvorrichtung einen zentralen Schmiermittelzufuhrkanal (16) in einem Bolzen (10) des Gelenks aufweist zur Versorgung der entlang des Bolzens vorhandenen Schmierstellen insbesondere über vom Schmiermittelzufuhrkanal (16) zu einer Bolzenoberfläche verlaufende Radialbohrungen.

14. Schließeinheit nach Annspruch 13,
**dadurch gekennzeichnet, dass**
die Schmiermittelzufuhrkanäle (16) mehrerer Bolzen (10) miteinander insbesondere über Schläuche (48) in Strömungsverbindung bringbar sind.

## Claims

1. Clamping unit for an injection moulding machine which comprises rotary joints (8, 12) and in particular knee-lever joints having joint surfaces which are moved relative to each other,
**characterized in that**
a magnetic device is provided in the region of the joint surfaces of at least one of the joints, the magnetic device being adapted to retain a magnetic fluid (18), with at least one recess (20, 26, 52) being provided in the region of the joint surfaces which recess (20, 26, 52) cooperates with the magnetic device for fixing the latter.

2. Clamping unit according to claim 1, **characterized in that** several recesses (20, 26, 52) are provided which are evenly distributed across the periphery of the joint surfaces and which cooperate with the magnetic device for fixing the latter.

3. Clamping unit according to claim 1 or 2, **characterized in that** at least one recess has the shape of an encircling annular groove (20) or step (52).

4. Clamping unit according to one of the preceding claims, **characterized in that** the recess or the recesses (20, 26, 52), respectively, is or are formed on the inside of a bushing (12) or on the outside of a bolt (10) of the joint.

5. Clamping unit according to one of the preceding claims, **characterized in that** the magnetic device is received in the at least one recess (20, 26, 52).

6. Clamping unit according to claim 5, **characterized in that** the extent of the magnetic device in the radial direction is smaller than that of the recess (20, 26, 52).

7. Clamping unit according to one of the preceding claims, **characterized in that** the magnetic device comprises an in particular flexible magnetic tape (22, 24; 56).

8. Clamping unit according to one of the preceding claims, **characterized in that** the magnetic device comprises a magnetic return element (54), in particular of iron.

9. Clamping unit according to one of the preceding claims, **characterized in that** in the region of the joint surfaces, at least one, in particular two pressure relief grooves (32) are provided in such a way as to encircle the periphery of the joint surfaces preferably in the vicinity of lateral joint boundaries.

10. Clamping unit according to claim 9, **characterized in that** the pressure relief groove / pressure relief grooves (20) are designed with respect to the magnetic device.

11. Clamping unit according to claim 10, **characterized in that** an in particular non-magnetic closing element (62) is provided for forming a pressure relief groove.

12. Clamping unit according to one of the preceding claims, **characterized in that** a lubricant supply device is provided which in particular works by gravitational pressure in particular for the supply of magnetic fluid (18).

13. Clamping unit according to claim 12, **characterized in that** the lubricant supply device comprises a central lubricant supply channel (16) in a bolt (10) of the joint for supplying the lubrication points present along the bolt in particular via radial bores which run from the lubrication supply channel (16) to a bolt surface.

14. Clamping unit according to claim 13, **characterized in that** the lubrication supply channels (16) of several bolts (10) are connectable with each other in particular by means of hoses (48) so as to form a flow connection.

## Revendications

1. Unité de fermeture pour presse à injection qui présente des articulations tournantes (8, 10) et en particulier des articulations de genouillère avec des surfaces d'articulation en mouvement les unes par rapport aux autres, **caractérisée en ce qu'**un dispositif magnétique réalisé pour retenir un fluide magnétique (18) est prévu dans la zone des surfaces d'articulation d'au moins l'une des articulations, au moins un évidement (20, 26, 52) qui coopère avec le dispositif magnétique pour sa fixation étant prévu dans la zone des surfaces d'articulation.

2. Unité de fermeture selon la revendication 1,
**caractérisée en ce que**
plusieurs évidements (20, 26, 52) répartis régulièrement sur la périphérie des surfaces d'articulation sont prévus, lesquels coopèrent avec le dispositif magnétique pour sa fixation.

3. Unité de fermeture selon la revendication 1 ou 2,
**caractérisée en ce**
**qu'**au moins un évidement présente la forme d'une rainure annulaire (20) rotative ou d'un échelonnement (52).

4. Unité de fermeture selon l'une quelconque des revendications précitées,
**caractérisée en ce que**
l'évidement ou les évidements (20, 26, 52) est ou sont réalisé(s) sur le côté intérieur d'une douille (12) ou le côté extérieur d'un boulon (10) de l'articulation.

5. Unité de fermeture selon l'une quelconque des revendications précitées,
**caractérisée en ce que**
le dispositif magnétique est reçu dans au moins un évidement (20, 26, 52).

6. Unité de fermeture selon la revendication 5,
**caractérisée en ce que**
l'extension du dispositif magnétique dans le sens radial est inférieure à celle de l'évidement (20, 26, 52).

7. Unité de fermeture selon l'une quelconque des revendications précitées,
**caractérisée en ce que**
le dispositif magnétique comporte une bande magnétique (22, 24 ; 56) en particulier flexible.

8. Unité de fermeture selon l'une quelconque des revendications précitées,
**caractérisée en ce**
**que** le dispositif magnétique comporte un élément de blindage (54), en particulier en fer.

9. Unité de fermeture selon l'une quelconque des revendications précitées,
**caractérisée en ce**
**qu'**au moins une mais en particulier deux rainures de décompression (32) s'étendant de préférence à proximité de limitations d'articulation latérales sont prévues tournant sur la périphérie dans la zone des surfaces d'articulation.

10. Unité de fermeture selon la revendication 9,
**caractérisée en ce que**
la/les rainure(s) de décompression (20) sont réalisées en intégrant le dispositif magnétique.

11. Unité de fermeture selon la revendication 10,
**caractérisée en ce**
**qu'**un élément de terminaison en particulier non magnétique (62) est prévu pour la réalisation d'une rainure de décompression.

12. Unité de fermeture selon l'une quelconque des revendications précitées,
**caractérisée en ce**
**qu'**un dispositif d'amenée de lubrifiant fonctionnant en particulier grâce à la force de gravité est prévu en particulier pour l'amenée de fluide magnétique (18).

13. Unité de fermeture selon la revendication 12,
**caractérisée en ce que**
le dispositif d'amenée de lubrifiant présente un canal d'amenée de lubrifiant central (16) dans un boulon (10) de l'articulation pour l'alimentation des points de lubrification présents le long du boulon, en particulier par le biais de perçages radiaux s'étendant du canal d'amenée de lubrifiant (16) à une surface de boulon.

14. Unité de fermeture selon la revendication 13,
**caractérisée en ce que**
les canaux d'amenée de lubrifiant (16) de plusieurs boulons (10) peuvent être amenés en liaison d'écoulement les uns avec les autres en particulier par le biais de tuyaux flexibles (48).
